# EUROPÄISCHE PATENTSCHRIFT

(11) **EP 3 348 967 B1**
(45) Veröffentlichungstag und Bekanntmachung des Hinweises auf die Patenterteilung: **22.05.2019**
(21) Anmeldenummer: 18150223.8
(22) Anmeldetag: 03.01.2018
(51) Int. Cl.: G01D 5/347

(54) **OPTOELEKTRONISCHES POSITIONSERFASSUNGSSYSTEM UND VERFAHREN ZUR POSITIONSBESTIMMUNG**
OPTOELECTRONIC POSITION DETECTION DEVICE AND METHOD FOR POSITION DETECTION
SYSTÈME DE DÉTECTION DE POSITION OPTOÉLECTRONIQUE ET PROCÉDÉ DE DÉTERMINATION DE LA POSITION

(30) Priorität: 12.01.2017 DE 102017100506
(43) Veröffentlichungstag der Anmeldung: 18.07.2018
(73) Patentinhaber: Sick AG, 79183 Waldkirch (DE)
(72) Erfinder: Tschuch, Sebastian, 79104 Freiburg (DE); Fehrenbach, Thomas, 79261 Gutach-Siegelau (DE); Fischer, Martin, 77887 Sasbachwalden (DE); Ams, Mathias, 79211 Denzlingen (DE); Schwörer, Stefan, 77978 Schuttertal (DE)

(56) Entgegenhaltungen:
- EP-A1- 0 819 913
- DE-B4-102005 047 658
- DE-U1-202014 100 689
- US-A1- 2002 104 716

## Beschreibung

Die Erfindung betrifft ein optoelektronisches Positionserfassungssystem und ein Verfahren zur Positionsbestimmung nach dem Oberbegriff von Anspruch 1 beziehungsweise 5.

Bekannte optoelektronische Positioniersysteme bestehen aus einem codelesenden Sensor und einem Positionsmaßstab, der eine Vielzahl aneinandergereihter optischer Positionsmarken aufweist, etwa Barcodes oder ähnliche spezielle Markierungen. Die Positionsmarken enthalten eine absolute Information über ihre eigene Position innerhalb des Positionsmaßstabs oder bezüglich einer anderen Referenz. Der Sensor ist in der Lage, eine Positionsmarke zu erfassen und deren Positionsinformation auszulesen. Befindet sich der Sensor in Relativbewegung zu dem Positionsmaßstab, so kann der Sensor anhand der ausgelesenen Positionsinformation auf seine eigene Position schließen. Eine wichtige Anwendung ist, den Sensor an einem Fahrzeug zu befestigen und die Positionsmarken längs einer vorgesehenen Fahrstrecke, zum Beispiel längs einer Schiene, anzubringen. Typische Anwendungen sind Hängeförderer bzw. Hängebahnen. Das Fahrzeug kann mit dem Positioniersystem gezielt automatisch an bestimmte Positionen gesteuert werden oder sich selbst orientieren.

Da derartige automatisch fahrende Fahrzeuge immer auch eine Unfallgefahr darstellen, wenn sie beispielsweise falsche Positionsinformationen haben, sind Positioniersysteme bekannt, die besondere Vorkehrungen aufweisen, um die Positionsbestimmung sicherer zu machen.

Aus der EP 0819913 A1 ist eine Vorrichtung zur Erfassung einer rotativen Position eines Maschinenteils bekannt. Dazu weist die Vorrichtung ein Taktlineal auf, das von einer Sensoreinheit abgetastet wird. Die Sensoreinheit erkennt und zählt die Striche des Taktlineals. Die Sensoreinheit weist zwei Sensoren auf, die in einem Abstand zueinander die vorbeilaufenden Striche registrieren.

DE 202014100689 U1 offenbart eine weitere Vorrichtung.

US 20020104716 A1 offenbart ein optisches Positionserfassungssystem zur Positionsbestimmung eines Aufzugs. In einem Ausführungsbeispiel erfassen zwei in Aufzugsrichtung beabstandete Kameras einen linearen Maßstab mit Wegmarken. Jede der Kameras "liest" die Position vom Maßstab ab.

Eine weitere Vorrichtung zur sicheren Positionsbestimmung ist beispielsweise aus der DE 102005047658 B4 bekannt. Die Sicherheit wird dadurch erhöht, dass die Positionsmarken von zwei unterschiedlichen (diversitären) Sensoren erfasst werden und deren Ergebnisse mittels einer fehlersicheren "Ausgangsbeschaltung" als sichere Ausgangssignale ausgegeben werden, die wiederum in eine sichere SPS verarbeitet werden.

Nachteilig daran ist, dass zwei verschiedene Sensortypen eingesetzt werden müssen, was aufwändig und teuer ist. Unterschiedliche Sensorik bedeuten für den Anwender eine Reihe von Nachteilen, wie mehr Knowhow für Konfiguration und Einstellungen beim Wartungs- und Servicepersonal, aufwändigere Lagerhaltung (unterschiedliche Halterungen, Anschlusskabel usw.), unterschiedliche Software zur Sensorkonfiguration erforderlich, unterschiedliche Ansprechpartner beim Produktsupport, schlechtere Konditionen für Rahmenverträge bei zwei statt einem Sensorhersteller. Weiter nachteilig ist, dass die beiden Sensoren in dem System nach DE 102005047658 B4 dieselben Barcodes gleichzeitig lesen, denn dann treten bei Verschmutzungen der Barcodes Leseprobleme auf. In zahlreichen Anwendungen, besonders an Schienenstößen, Weichen, Schraubstellen und dergleichen, aber auch einfach durch längere Abnutzung, sind im realen Betrieb solche Verschmutzungen zu erwarten.

Es ist daher Aufgabe der Erfindung, ein gattungsgemäßes Positionserfassungssystem zu schaffen, das robuster und zuverlässiger arbeitet und das insbesondere die funktionale Sicherheit, wie sie von den Normen (EN 61508, EN 62061, EN ISO 13849) gefordert wird, ohne größeren Aufwand erfüllt kann.

Diese Aufgabe wird durch ein optoelektronisches Positionserfassungssystem und ein Verfahren zur Positionsbestimmung nach Anspruch 1 beziehungsweise 5 gelöst.

Das optoelektronische Positionserfassungssystem zur Positionsbestimmung umfasst einen Positioniermaßstab mit Positionsmarken, eine Sensorvorrichtung mit zwei Sensoreinheiten, bestehend aus je einem Lichtempfänger zum Erzeugen von Empfangssignalen aus empfangenem Licht, das von den Positionsmarken reflektiert wurde und je einer Auswerteeinheit zum Auswerten der Empfangssignale und Ausgabe der Auswerteergebnisse. Erfindungsgemäß sind die Sensoreinheiten identisch ausgebildet und sind in einer festen räumlichen Beziehung und mit Abstand zueinander angeordnet, so dass eine erste der zwei Sensoreinheiten immer wenigstens zwei Positionsmarken erfasst und die zweite der Sensoreinheiten immer drei andere Positionsmarken erfasst. Die von den Auswerteeinheiten bereitgestellten Auswerteergebnisse werden einer Sicherheitssteuerung zugeführt, in der aus den Auswerteergebnissen eine fehlersichere Positionsinformation erzeugt wird.

Die Erfindung hat den Vorteil, dass zwei identische Sensoreinheiten genutzt werden. Damit sind die eingangs genannten Nachteile, wie mehr Knowhow für Konfiguration und Einstellungen beim Wartungs- und Servicepersonal, aufwändigere Lagerhaltung, unterschiedliche Software zur Sensorkonfiguration, erhöhter Produktsupport etc., vermieden.

Eigentlich geht mit identischen Sensoreinheiten die zur Erfüllung der Normen benötigte Diversität verloren, aber hier kommt eine zentrale Idee der Erfindung ins Spiel, denn mit den weiteren kennzeichnenden Merkmalen der Erfindung, nämlich der Anordnung der Sensoreinheiten in einer festen räumlichen Beziehung und mit Abstand zueinander, so dass eine erste der zwei Sensoreinheiten immer wenigstens zwei Positionsmarken erfasst und die zweite der Sensoreinheiten immer drei andere Positionsmarken erfasst, wird eine Quasi-Diversität geschaffen. Denn mit einer solchen Anordnung sind die Rohdaten der Sensoren diversitär, und zwar auf vielfältige Weise. Erstens werden unterschiedliche Codes gelesen, zweitens werden unterschiedliche Anzahlen von Codes gelesen, drittens werden alle Codes zweimal zu verschiedenen Zeitpunkten gelesen, nämlich einmal von der ersten und bei Weiterfahrt dann auch von der zweiten Sensoreinheit. Durch diese mehreren Maßnahmen erhält man eine Quasi-Diversität, die der echten Diversität zweier diversitären Sensoren gleichkommt oder zumindest so nahe kommt, dass die Sicherheitsnormen erfüllt werden können.

Für ein gemeinsames, fehlersicheres Ergebnis der Positionsmessung des erfindungsgemäßen optoelektronischen Positionserfassungssystems müssen schließlich die beiden von den Auswerteeinheiten bereitgestellten Auswerteergebnisse einer Sicherheitssteuerung zugeführt werden, in der aus den Auswerteergebnissen eine fehlersichere Positionsinformation erzeugt wird.

Darüber hinaus sind Lesefehler aufgrund Verschmutzung oder dergleichen besser beherrschbar, da mehrere Codes zweimal zu unterschiedlichen Zeiten gelesen werden.

Wenn die Sensoreinheiten gegeneinander verkippt sind, so dass die Positionsmarken von den Sensoreinheiten unter unterschiedlichen Blickwinkeln gesehen werden, kann dadurch der "Grad der Diversität" erhöht werden, d.h. die Diversität wird im Sinne der Normen verbessert bzw. verstärkt.

Für eine feste und dauerhafte räumliche Zuordnung ist es vorteilhaft, wenn die Sensoreinheiten auf einer gemeinsamen Halterung montiert sind.

Durch die feste räumliche Zuordnung ist es möglich, die Auswerteergebnisse der beiden Sensoreinheiten in der Sicherheitssteuerung auf Plausibilität zu prüfen, also z.B. zu prüfen, ob sich in den Positionswerten, die den Auswerteergebnissen entsprechen, der Versatz der Sensoreinheiten wiederspiegelt. Oder einfacher ausgedrückt, ob die Differenz der Positionsergebnisse der einzelnen Sensoreinheiten dem Abstand der Sensoreinheiten entspricht. Eine solche Überprüfung erhöht die Sicherheit weiter.

Die Sicherheitssteuerung vergleicht von der ersten Sensoreinheit und von der zweiten Sensoreinheit bestimmte Positionen miteinander oder verrechnet sie zu einer gemeinsamen Position. Der Vergleich dient beispielsweise dazu, in sicheren Anwendungen einen Fehler aufzudecken. Das Verrechnen führt zu einer höheren Messgenauigkeit aufgrund einer Datenfusion zweier unabhängiger Messwerte.

Dies ist auch Gegenstand des Verfahrensanspruchs.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

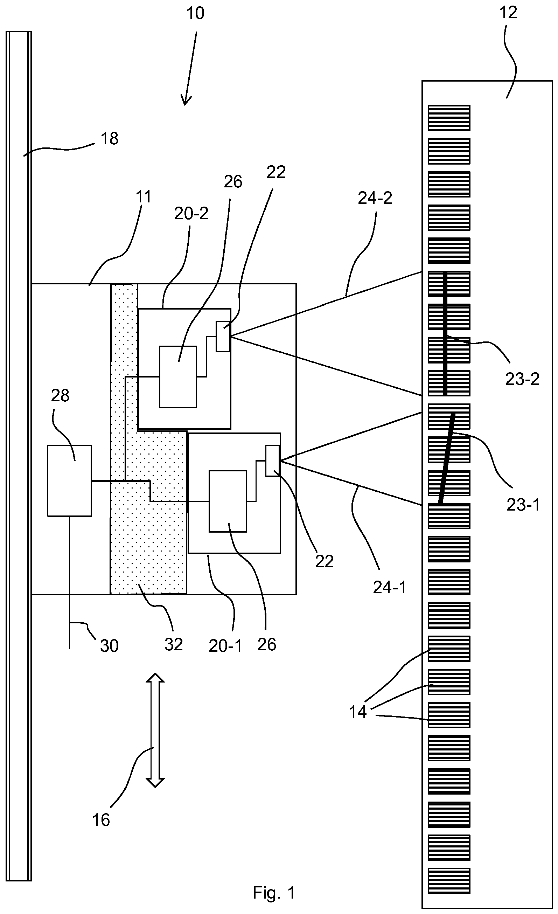

- Fig. 1: eine schematische Darstellung eines optoelektronischen Positionserfassungssystems zur Bestimmung der Position anhand eines Maßstabs mit Positionsmarken.

Fig. 1 zeigt eine schematische Darstellung eines optoelektronischen Positionserfassungssystems 10, das die Position einer Sensorvorrichtung 11 entlang eines Verfahrweges anhand eines Maßstabs 12 mit Positionsmarken 14 erkennt. Die Sensorvorrichtung 11 befindet sich im Betrieb in Relativbewegung zu dem Maßstab 12, beispielsweise weil die Sensorvorrichtung 11 an einem Fahrzeug und der Maßstab 12 an einer Wand oder auf dem Boden längs der vorgesehenen Fahrstrecke befestigt ist. Häufig ist die Bewegung (Richtung 16) der Sensorvorrichtung 11 beziehungsweise des Fahrzeugs linear zwangsgeführt, beispielsweise durch Schienen 18. Dann kann der Maßstab 12 in definiertem Abstand längs der Zwangsführung angebracht werden.

Die Sensorvorrichtung 11 weist zwei identisch ausgebildete Sensoreinheiten 20-1 und 20-2 auf. Jede der Sensoreinheiten weist einen Lichtempfänger 22 auf zum Erzeugen von Empfangssignalen aus empfangenem Licht. Es sind verschiedene Ausführungsformen möglich. Der Lichtempfänger 22 kann ein Bildsensor sein, beispielsweise eine pixelaufgelöste matrix- oder zeilenförmige Anordnung von Lichtempfangselementen in CCD- oder CMOS-Technologie. Es ist aber beispielsweise auch möglich, dass die Sensoreinheit 20 ein Scanner ist, der über einen Drehspiegel oder einen Polygonradspiegel einen Lesestrahl aussendet und wieder empfängt und so den jeweiligen Abschnitt des Maßstabs 12 abtastet. Ein solcher Lesestrahl ist in Fig. 1 mit 23-1 bzw. 23-2 bezeichnet. Auch das Hell-Dunkel-Signal des Abtaststrahls liefert nach einer A/D-Wandlung eine Zeile von Pixeln je Abtastung, die hier ebenso als Bilddaten aufgefasst werden wie die Aufnahmen eines Bildsensors.

Jede Sensoreinheit 20-1 bzw. 20-2 hat je einen Sichtbereich 24-1 bzw. 24-2 zur optischen Erfassung von den im Sichtbereich befindlichen Positionsmarken 14. Die Sensoreinheiten 20-1 und 20-2 sind dabei so in der Sensorvorrichtung 11 angeordnet und die Sensorvorrichtung 11 und der Maßstab 12 sind so zueinander angeordnet, dass die erste Sensoreinheit 20-1 immer wenigstens zwei der Positionsmarken 14 erfasst und die zweite Sensoreinheit 20-2 immer drei andere Positionsmarken 14 erfasst.

Unabhängig von ihrer konkreten Gewinnung werden die Bilddaten von dem Lichtempfänger 22 an eine Auswertungseinheit 26 übergeben. In der Auswerteeinheit wird aus den Bilddaten in an sich bekannter Weise die in den Positionsmarken 14 enthaltene Positionsinformation decodiert. Die Positionsmarken 14 enthalten beispielsweise eine metrische Positionsinformation oder eine Abstandsinformation bezüglich einer Referenz, vorzugsweise in absoluter Codierung. Bei einer auch denkbaren inkrementellen Codierung kann die Sensorvorrichtung 11 ihre Position nur relativ zu einer Anfangsposition bestimmen oder es wird eine anfängliche Referenzfahrt erforderlich.

Die von den Auswerteeinheiten 26 bereitgestellten Positionsinformationen werden einer Sicherheitssteuerung 28 zugeführt, in der aus den beiden verschiedenen Positionsinformationen eine fehlersichere Positionsinformation erzeugt wird. Abhängig von dieser fehlersicheren Positionsinformation kann an einem Ausgang 30 ein Haltesignal, Not-Stopp-Signal oder dergleichen mehr oder die fehlersichere Positionsinformation selber ausgegeben werden.

Aus der Positionsinformation leitet die Sensorvorrichtung 11 ihre eigene Position mit Hilfe bekannter oder vorab eingelernter Parameter wie Perspektive und Abstand zum Maßstab 12 ab. Diese Umrechnung kann vermieden werden, wenn die Positionsmarken 14 bereits auf die Sensorvorrichtung 11 bezogene Positionsinformationen codiert enthalten. Bei zum Maßstab 12 senkrechter Orientierung des Sensors 10 und Positionsbestimmung nur in einer Dimension entfällt die Umrechnung ohnehin. Aus mindestens zwei Positionsbestimmungen und den zugehörigen Zeitpunkten kann auch eine Geschwindigkeit der Relativbewegung zwischen Sensorvorrichtung 11 und Maßstab 12 geschätzt werden.

Die Sensoreinheiten 20-1 und 20-2 sind in fester räumlicher Beziehung und mit Abstand in Bewegungsrichtung 16 zueinander angeordnet. Damit diese Anordnung fest und definiert ist sind die Sensoreinheiten 20-1 und 20-2 auf einer gemeinsamen Halterung 32 montiert. Die Halterung 32 kann ein massiver Montageblock, der in einem Gehäuse der Sensorvorrichtung 11 festgelegt ist, sein, wobei der Montageblock Anschläge zur definierten Festlegung der Sensoreinheiten 20-1 und 20-2 aufweisen kann.

Des Weiteren können die Sensoreinheiten 20-1 und 20-2 gegeneinander verkippt sein, wie dies an der Nicht-Parallelität der in Fig. 1 dargestellten Leselinien 23-1 und 23-2 verdeutlicht sein soll. Auf diese Weise werden die Positionsmarken 14 von den Sensoreinheiten 20-1 und 20-2 unter unterschiedlichen Blickwinkeln gesehen.

Das erfindungsgemäße Verfahren zur fehlersicheren Positionsbestimmung umfasst folgende Schritte: Zunächst werden die Positionsmarken 14 auf einem Positioniermaßstab 12 mit der Sensorvorrichtung optisch erfasst. In den Auswerteeinheiten 26 der Sensoreinheiten 20-1 und 20-2 werden die in den Positionsmarken 14 codierten Positionsinformationen decodiert und diese Positionsinformationen an die Sicherheitssteuerung 28 gegeben. In der Sicherheitssteuerung 28 wird geprüft, ob die Differenz der beiden Positionsinformationen plausibel ist mit dem räumlichen Abstand der beiden Sensoreinheiten 20-1 und 20-2. Wenn die Plausibilität gegeben ist, wird aus den beiden Positionsinformationen eine fehlersicher Positionsinformation für die Sensorvorrichtung gewonnen. Gegebenenfalls wird diese fehlersichere Positionsinformation ausgegeben oder anderweitig verarbeitet. Beispielsweise könnte die fehlersichere Positionsinformation genutzt werden, um abhängig davon ein Sicherheitssignal zu erzeugen.

## Patentansprüche

1. Optoelektronisches Positionserfassungssystem (10) zur Positionsbestimmung mit einem Positioniermaßstab (12) mit Positionsmarken (14) und mit einer Sensorvorrichtung (11) mit zwei Sensoreinheiten (20-1, 20-2), bestehend aus je einem Lichtempfänger (22) zum Erzeugen von Empfangssignalen aus empfangenem Licht, das von den Positionsmarken (14) reflektiert wurde und je einer Auswerteeinheit (26) zum Auswerten der Empfangssignale und Ausgabe der Auswerteergebnisse, **dadurch gekennzeichnet, dass** die Sensoreinheiten (20-1, 20-2) identisch ausgebildet sind, und dass die Sensoreinheiten (20-1, 20-2) in einer festen räumlichen Beziehung und mit Abstand zueinander angeordnet sind, so dass eine erste (20-1) der zwei Sensoreinheiten immer wenigstens zwei Positionsmarken (14) erfasst und die zweite (20-2) der Sensoreinheiten immer drei andere Positionsmarken (14) erfasst, und dass die Auswerteergebnisse einer Sicherheitssteuerung (28) zugeführt sind, die ausgebildet ist, aus den Auswerteergebnissen eine fehlersichere Positionsinformation zu erzeugen.

2. System nach Anspruch 1, **dadurch gekennzeichnet, dass** die Sensoreinheiten gegeneinander verkippt sind, so dass die Positionsmarken von den Sensoreinheiten unter unterschiedlichen Blickwinkeln gesehen werden.

3. System nach einem der vorhergehenden Ansprüche, **dadurch gekennzeichnet, dass** die Sensoreinheiten auf einer gemeinsamen Halterung montiert sind.

4. System nach einem der vorhergehenden Ansprüche, **dadurch gekennzeichnet, dass** die Auswerteergebnisse Positionsergebnisse sind und die Sicherheitssteuerung die beiden bestimmten Positionen auf Plausibilität prüft.

5. Verfahren zur fehlersicheren Positionsbestimmung, bei dem Positionsmarken (14) auf einem Positioniermaßstab (12) mit einem optoelektronischen Positionserfassungssystem (10) nach einem der vorhergehenden Ansprüche erfasst werden und bei dem in den Positionsmarken (14) codierte Positionsinformationen ausgelesen werden und die Positionsinformationen zu einer fehlersicheren Positionsangabe in einer Sicherheitssteuerung (28) verarbeitet werden, wobei die Sicherheitssteuerung (28) prüft, ob die Positionsinformationen mit dem räumlichen Abstand der Sensoreinheiten (20-1, 20-2) plausibel sind.

## Claims

1. Optoelectronic position detection system (10) for position determination, having a positioning scale (12) with position marks (14) and having a sensor device (11) with two sensor units (20-1, 20-2), each consisting of a light receiver (22) for generating received signals from received light reflected by the position marks (14) and an evaluation unit (26) for evaluating the received signals and outputting the evaluation results, **characterized in that** the sensor units (20-1, 20-2) are designed identically, and **in that** the sensor units (20-1, 20-2) are arranged in a fixed spatial relationship and at a distance from one another, so that a first (20-1) of the two sensor units always detects at least two position marks (14) and the second (20-2) of the sensor units always detects three other position marks (14), and **in that** the evaluation results are fed to a safety controller (28) which is designed to generate fail-safe position information from the evaluation results.

2. System according to claim 1, **characterized in that** the sensor units are tilted relative to one another so that the position marks are seen by the sensor units at different viewing angles.

3. System according to one of the preceding claims, **characterized in that** the sensor units are mounted on a common support.

4. System according to one of the preceding claims, **characterized in that** the evaluation results are position results and the safety controller checks the two determined positions for plausibility.

5. Method for fail-safe position determination, in which position marks (14) are detected on a positioning scale (12) with an optoelectronic position detection system (10) according to one of the preceding claims and in which position information coded in the position marks (14) is read out and the position information is processed in a safety controller (28) to a fail-safe position indication, the safety controller (28) checking whether the position information is plausible with the spatial spacing of the sensor units (20-1, 20-2).

## Revendications

1. Système optoélectronique de détection de position (10) pour la détermination de position, comprenant une échelle de positionnement (12) avec des marques de position (14) et un dispositif de détection (11) avec deux unités de détection (20-1, 20-2) constituées chacune d'un récepteur de lumière (22) pour générer des signaux reçus de lumière reçue réfléchie par les marques de position (14) et une unité d'évaluation (26) pour évaluer les signaux reçus et délivrer les résultats d'évaluation, **caractérisé en ce que** les unités de détection (20-1, 20-2) sont conçus de manière identique, et **en ce que** les unités de capteurs (20-1, 20-2) sont disposées dans une relation spatiale fixe et à distance l'une de l'autre, de sorte qu'une première (20-1) des deux unités de capteurs détecte toujours au moins deux marques de position (14) et la seconde (20-2) des unités de capteurs détecte toujours trois autres marques de position (14), et que les résultats des évaluations sont transmis à un contrôleur de sécurité (28) qui est conçu pour générer des informations de position sans erreur à partir des résultats des analyses.

2. Système selon la revendication 1, **caractérisé en ce que** les unités de capteurs sont inclinées l'une par rapport à l'autre de sorte que les marques de position sont vues par les unités de capteurs sous différents angles de vue.

3. Système selon l'une des revendications précédentes, **caractérisé en ce que** les unités de capteurs sont montées sur un support commun.

4. Système selon l'une des revendications précédentes, **caractérisé en ce que** les résultats d'analyse sont des résultats de position et **en ce que** le contrôleur de sécurité vérifie la plausibilité des deux positions déterminées.

5. Procédé de détermination de position de sécurité, dans lequel des marques de position (14) sont détectées sur une échelle de positionnement (12) avec un système de détection de position optoélectronique (10) selon l'une des revendications précédentes et dans lequel des informations de position codées dans les marques de position (14) sont lues et traitées dans un contrôleur de sécurité (28) en une indication de position de sécurité, le contrôleur de sécurité (28) vérifiant si les informations de position sont plausibles avec la distance dans le vide des capteurs (20-1, 20-2).
